Europäisches Patentamt

European Patent Office

Office européen des brevets

(19)

(11) EP 1 273 632 A1

(12) EUROPEAN PATENT APPLICATION
published in accordance with Art. 158(3) EPC

(43) Date of publication:
08.01.2003 Bulletin 2003/02

(51) Int Cl.⁷: **C08L 97/02**, C08K 5/13, C08K 3/32

(21) Application number: 01912228.2

(22) Date of filing: 09.03.2001

(86) International application number:
PCT/JP01/01860

(87) International publication number:
WO 01/074949 (11.10.2001 Gazette 2001/41)

(84) Designated Contracting States:
AT BE CH CY DE DK ES FI FR GB GR IE IT LI LU
MC NL PT SE TR
Designated Extension States:
AL LT LV MK RO SI

(30) Priority: 31.03.2000 JP 2000096221

(71) Applicant: Hunaoka, Masamitsu
Tsu-shi, Mie 514-0005 (JP)

(72) Inventors:
• HUNAOKA, Masamitsu
Tsu-shi, Mie 514-0005 (JP)
• MORITA, Shuji
Tsu-shi, Mie 514-0101 (JP)

(74) Representative: Benson, John Everett
J. A. Kemp & Co.,
14 South Square,
Gray's Inn
London WC1R 5JJ (GB)

(54) **LIGNOCELLULOSIC COMPOSITION COMPRISING LIGNOPHENOL DERIVATIVE AND CELLULOSE INGREDIENT**

(57) The present invention provides lignocellulose compositions comprising a lignophenol derivative and a cellulose component, which are obtained by adding an acid to a lignocellulose material, to which a phenol derivative was previously added, and mixing the combination. The present invention provides new compositions that enable repeated and effective utilization of both lignin and cellulose, which are components of lignocellulose complex structures in forest resources, thereby making it possible to effectively utilize forest resources.

FIG. 3

**Description**

TECHNICAL FIELD

The present invention relates to lignocellulose compositions comprising a lignophenol derivative and a cellulose component. More particularly, the present invention relates to lignocellulose compositions comprising a lignophenol derivative formed by acid-treating a lignocellulose material, such as wood, into which a phenol derivative has previously been sorbed, and a cellulose component.

BACKGROUND ART

The use of fossil resources has become essential in modern society. However, because fossil resources cannot be renewed, there is a concern that the world's fossil resources will be exhausted in the near future. Thus, biomass resources have been drawing attention as an alternative to fossil resources. Ligneous biomass, in particular, has been drawing attention for the following reasons: (1) it exists in vast amounts on the earth, can be regenerated within a short period, and can be continuously supplied if properly maintained, and (2) after being used as a resource, ligneous biomass naturally decomposes and becomes a renewable biomass resource.

Ligneous biomass, i.e., lignocellulose resources, includes hydrophilic carbohydrates, such as cellulose or hemicellulose, and hydrophobic lignins (polyphenol), which together form an interpenetrating polymer network (IPN) within the cell wall and exist as a complicated, intertwined complex. Various useful properties have been imparted to lignocellulose resources by using this complex structure.

Lignocellulose resources are used in two ways. The first way is direct usage, in which the complex is processed into building materials or furniture materials having certain shapes or is used as manufacturing materials, such as wood chips and fibers. The second way is indirect usage, in which cellulose - a component of the complex - is extracted and converted into pulp. In order to effectively utilize forest resources in view of diminishing fossil resources, it is important to plan for re-utilization of forest resources in both of these usage methods.

However, at present, when the complex, i.e., the wood, is directly used as a manufacturing material as is, the shape and size of the wood make reuse difficult; as a result, the wood is often discarded after use. Furthermore, when wood is used as a manufacturing material, a thermosetting resin is used as a binder, thereby again making reuse difficult. Therefore, when direct usage has been employed, it has been difficult to reuse the cellulose, lignin, etc., which include the complex.

When indirect usage has been employed, in which cellulose - a component of the complex - is extracted and converted into pulp, attempts have been made to reuse the cellulose by repeating the processes for making fibers and sheets. However, the majority of the lignin, which makes up the remainder of the complex excluding the cellulose, is not being utilized.

As explained above, lignin is currently not being reused in either direct or indirect usage. However, lignin is the second most abundant organic material on the earth following cellulose. Despite this fact, no method has been developed to create wood-based processed products that can be reused or to devise ways to reuse such wood-based processed products by focusing on the lignin contained in the complex, i.e., wood.

In order to develop a method for effectively utilizing the lignin in the ligneous biomass (lignocellulose material), it is necessary to first separate the wood into its constituent components. Based on conducted research, the inventors of the present invention developed methods for suppressing the inactivation of the lignin by combining the decomposition the cell structure through the swelling of carbohydrates using a highly-concentrated acid, with the solvation of the lignin with a phenol derivative, thereby separating the lignocellulose material into its constituent components, i.e., lignophenol derivatives and carbohydrates (Japanese Patent Application No. H2-233701). A method has been reported, for example, of making a fabricated body by applying the lignophenol derivative obtained using this method to a manufacturing material, such as cellulose fiber (Japanese Patent Application No. H9-278904).

However, the aforementioned patent applications do not mention the use of the cellulose component, which makes up the remainder of the lignocellulose material excluding the lignin.

DISCLOSURE OF THE INVENTION

One object of the present invention is to provide means of converting ligneous resources, which have defined material properties, into a new functional resource that can be molded like plastic. Another object of the present invention is to overcome the high degree of association (crystal structure) of cellulose by utilizing a phase-separation system for lignocellulose materials and at the same time to form a homogenous system with the cellulose fraction by converting the lignin fraction into a phenol-based linear polymer in the form of lignophenol. Re-crystallization of the cellulose is thus prevented and also the entire material can flow at the melting temperature of lignophenol, thereby resulting in a material that can be molded as desired.

As a result of repeating diligent investigations in order to overcome the aforementioned problems, the inventors of the present invention discovered that: a homogenous composition comprising a lignophenol derivative and a cellulose component can be formed by adding an acid to a lignocellulose material, to which a phenol derivative was previously added, and mixing the combination; the resulting composition possesses plasticity, thereby achieving the present invention.

The present invention provides lignocellulose compositions comprising a lignophenol derivative and a cellulose component, which is obtained by adding an acid to a lignocellulose material to which a phenol derivative was previously added, and mixing the combination.

Preferably, the lignophenol derivative and the cellulose component form a homogeneous system.

Preferably, the acid possesses the property of swelling the cellulose and also minimizes hydrolysis of cellulose.

Preferably, the phenol derivative added to the lignocellulose material is a phenol derivative having at least one substituent in the ortho and/or para positions.

Preferably, the phenol derivative added to the lignocellulose material is a phenol derivative having at least one substituent in the ortho and/or para positions, which substituent is selected from a lower alkyl, a lower alkoxy, and a hydroxyl group.

Preferably, the composition according to the present invention is a lignocellulose composition comprising a lignophenol derivative and a cellulose component, which is formed by adding 95% phosphoric acid to a lignocellulose material, to which a phenol derivative was previously added, the phenol derivative being selected from p-cresol, 2,6-xylenol, 2,4-xylenol, 2-methoxyphenol (Guaiacol), 2,6-dimethoxyphenol, catechol, resorcinol, homocatechol, pyrogallol, and phloroglucinol, and mixing the combination.

Preferably, the lignophenol derivative is acylated or methylolated.

Preferably, the lignocellulose composition described in the present invention is a plasticizing material.

Another aspect of the present invention provides a molded product comprising the aforementioned lignocellulose composition described in the present invention.

Still another aspect of the present invention provides a method for manufacturing a lignocellulose composition according to the present invention, the method including a step of adding an acid to a mixture formed by processing a lignocellulose material using a phenol derivative and solvating the lignin component with said phenol derivative, and mixing the resulting combination.

Brief Explanation of Drawings

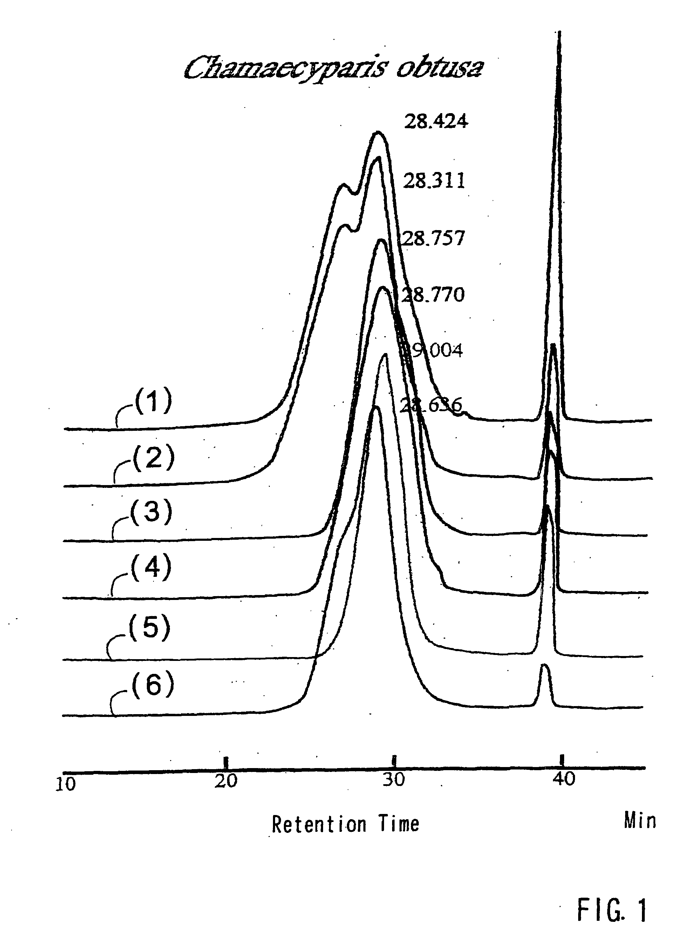

Figure 1 shows the GPC measurement result (for Japanese cypress) used to calculate molecular weight. In Figure 1, (1) indicates ligno-2,6-xylenol, (2) indicates ligno-2,4-xylenol, (3) indicates ligno-catechol, (4) indicates ligno-homocatechol, (5) indicates ligno-pyrogallol, and (6) indicates ligno-phloroglucinol.

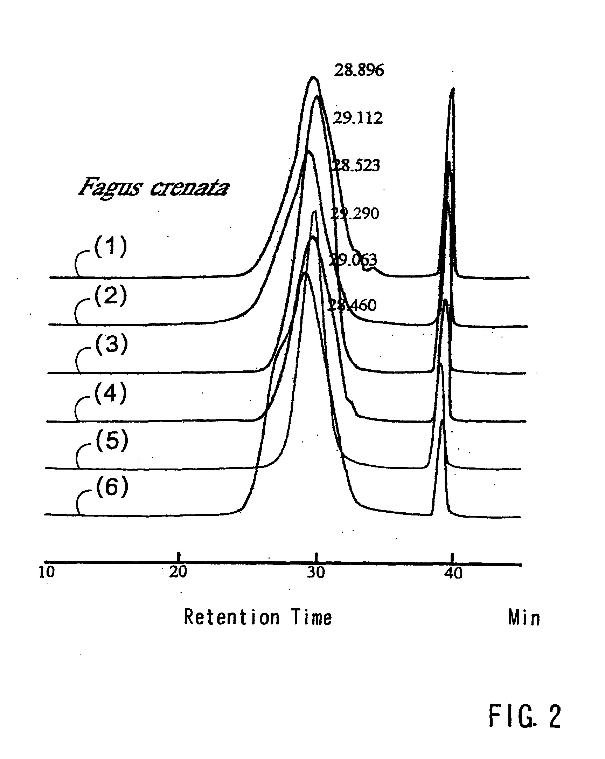

Figure 2 shows the GPC measurement result (for Japanese beech) used to calculate molecular weight. In Figure 2, (1) indicates ligno-2,6-xylenol, (2) indicates ligno-2,4-xylenol, (3) indicates ligno-catechol, (4) indicates ligno-homocatechol, (5) indicates ligno-pyrogallol, and (6) indicates ligno-phloroglucinol.

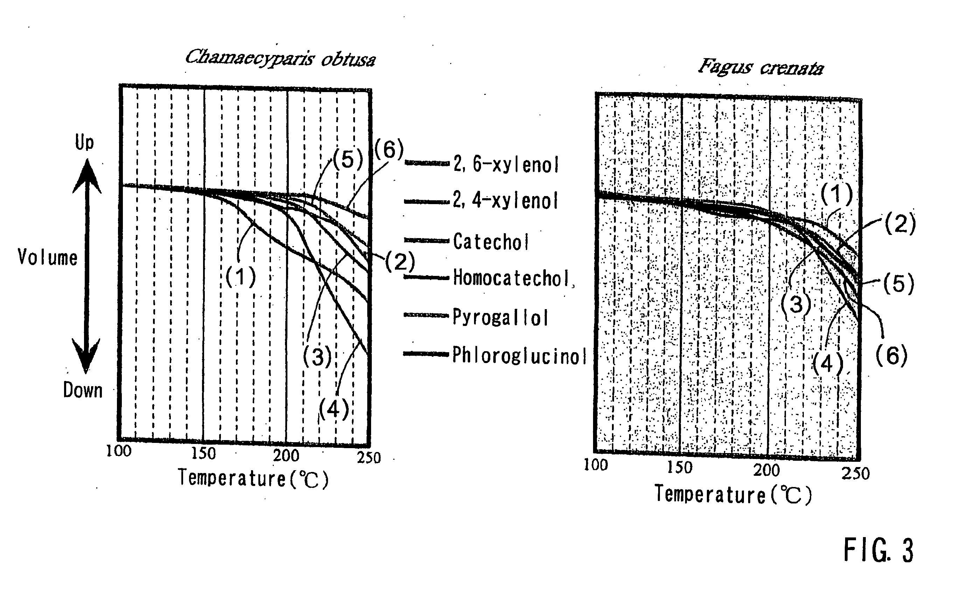

Figure 3 shows the measurement results of the TMA curves for various types of phenol derivatives/lignocellulose treated with 95% phosphoric acid. In Figure 3, (1) indicates ligno-2,6-xylenol, (2) indicates ligno-2,4-xylenol, (3) indicates ligno-catechol, (4) indicates ligno-homocatechol, (5) indicates ligno-pyrogallol, and (6) indicates ligno-phloroglucinol.

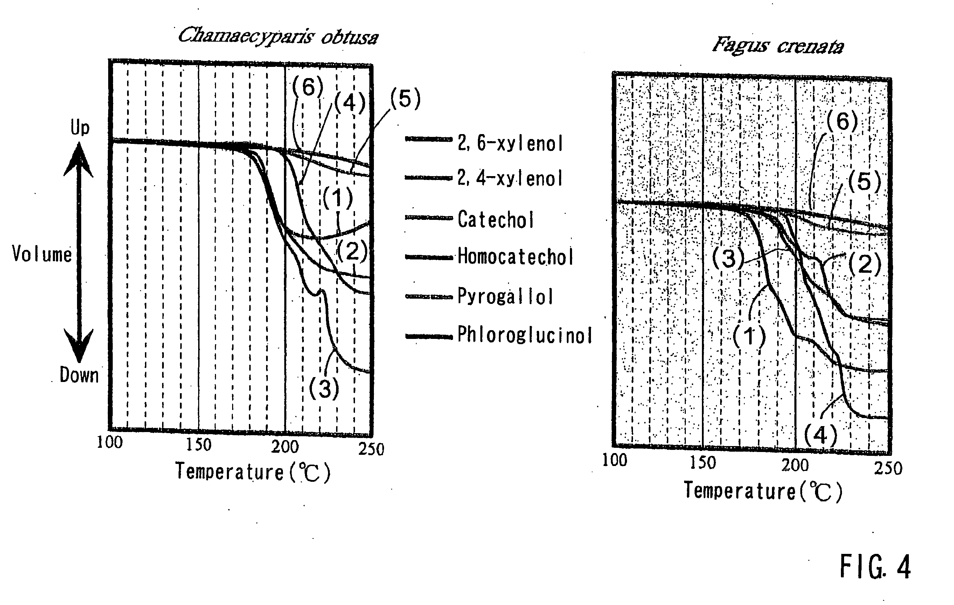

Figure 4 shows the measurement results of the TMA curve for the fraction that dissolves in acetone but does not dissolve in diethyl ether. In Figure 4, (1) indicates ligno-2,6-xylenol, (2) indicates ligno-2,4-xylenol, (3) indicates ligno-catechol, (4) indicates ligno-homocatechol, (5) indicates ligno-pyrogallol, and (6) indicates ligno-phloroglucinol.

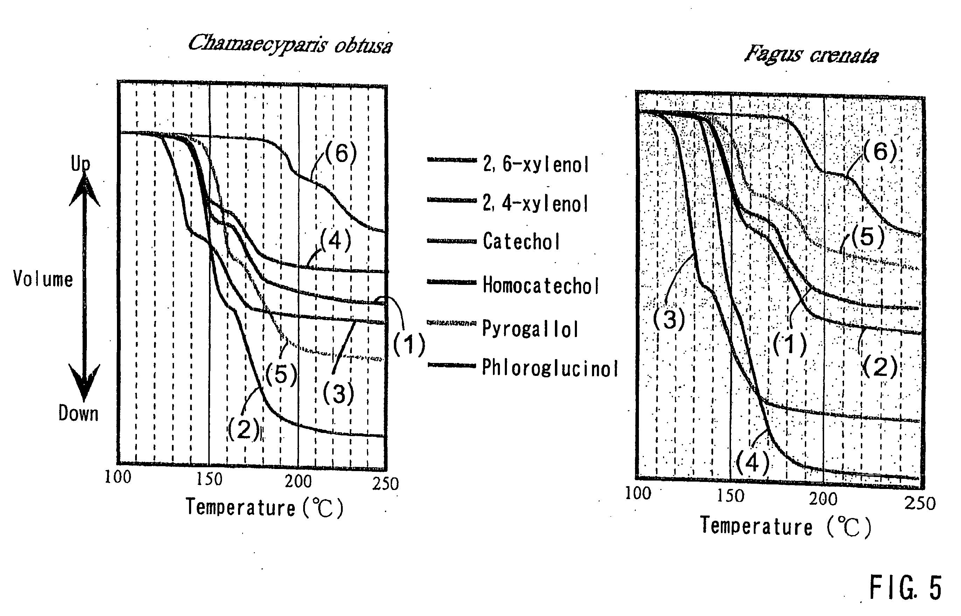

Figure 5 shows the measurement results of the TMA curve for the fraction following acetylation, which dissolves in acetone, but does not dissolve in diethyl ether. In Figure 5, (1) indicates ligno-2,6-xylenol, (2) indicates ligno-2,4-xylenol, (3) indicates ligno-catechol, (4) indicates ligno-homocatechol, (5) indicates ligno-pyrogallol, and (6) indicates ligno-phloroglucinol.

BEST MODES FOR PRACTICING THE INVENTION

Methods for making embodiments of the present invention will be further explained below.

The lignocellulose compositions described in the present invention are formed by adding an acid to a lignocellulose material, to which a phenol derivative was previously added, and mixing the combination.

A univalent phenol derivative, a bivalent phenol derivative, a trivalent phenol derivative, or other similar phenol derivatives can be used as the phenol derivative that is added to the lignocellulose material. Specific examples of univalent phenol derivatives include: naphthol, which may have one or more substituents, anthrol, which may have one or more substituents, and anthroquinol, which may have one or more substituents.

Specific examples of bivalent phenol derivatives include catechol, which may have one or more substituents, resorcinol, which may have one or more substituents, and hydroquinone, which may have one or more substituents.

A specific example of a trivalent phenol derivative includes pyrogallol, which may have one or more substituents.

There is no particular restriction on the type of substituent that the univalent, bivalent or trivalent phenol derivative may have, and any substituent may be used. However, the substituent is preferably a group other than an electrophilic group (e.g., halogen atom), such as a lower alkyl group (methyl group, ethyl group, propyl group, etc.), a lower alkoxy group (methoxy group, ethoxy group, propoxy group, etc.), an allyl group (phenyl group, etc.), or a hydroxyl group.

In addition, at least one of the two ortho positions of the phenolic hydroxyl group within the phenol derivative preferably is unsubstituted.

Preferred examples of the phenol derivative include p-cresol, 2,6-xylenol, 2,4-xylenol, 2-methoxyphenol (Guaiacol), 2,6-dimethoxyphenol, catechol, resorcinol, homocatechol, pyrogallol, and phloroglucinol.

By appropriately selecting the type of phenol derivative that is used, it is possible to control the properties (e.g., hydrophilicity, hydrophobicity, or physiological properties) of the entire lignocellulose composition obtained according to the present invention.

In addition, for the phenol derivative that is used in the present invention, a phenol derivative having a substituent in the fourth position (para position) and/or a phenol derivative having substituents in the second position (ortho position) and the fourth position (para position) are preferable. A phenol derivative having a substituent in the fourth position (para position) means a phenol derivative that does not have substituents in the two ortho positions. Further, a phenol derivative having substituents in the second position (ortho position) and the fourth position (para position) means a phenol derivative that does not have a substituent in the sixth position (one of the ortho positions).

It is also possible to react the lignophenol derivative with a cross-linking functional group forming compound under alkaline conditions, thereby synthesizing a cross-linking lignophenol derivative having a cross-linking functional group at the ortho position of the phenolic hydroxy group within the lignophenol derivative; then, by cross-linking this cross-linking lignophenol, a polymer material can be synthesized and used. In this case, by appropriately selecting the type of phenol derivative that is used, it is possible to adjust the frequency at which the cross-linking functional group is introduced.

In other words, if a phenol derivative having a substituent in the fourth position (para position) is used, the carbon atom in either the second or sixth position of such phenol derivative bonds with the carbon atom in the benzyl position of the phenylpropane unit of the lignin. In this case, the remaining carbon atom in the second or sixth position exists as a free carbon atom and acts as an introduction position for the cross-linking functional group.

On the other hand, if a phenol derivative having substituents in the second position (ortho position) and the fourth position (para position) is used, the carbon atom in the sixth position of such phenol derivative bonds with the carbon atom in the benzyl position of the phenylpropane unit of the lignin. In this case, because a free ortho or para position does not exist, no introduction position for the cross-linking functional group exists in the introduced phenol derivative. Consequently, the cross-linking functional group is introduced only into the lignin host.

As explained above, because lignin can be introduced by combining one or more types of phenol derivatives that include cross-linking functional groups having different reactivities, which have no introduction positions or that have different introduction positions, it is possible to control the introduction positions for the crosslinking functional group in the lignophenol derivative. As a result, it is possible to control the cross-linking density of the crosslinking lignin derivative.

In other words, in a lignophenol derivative separated by acid-treating a lignocellulose material in the presence of a phenol derivative or a polymer containing such a lignophenol derivative, it is also possible to use a phenol derivative having a substituent in the fourth position (para position) as a reacting-switching element and a phenol derivative having substituents in the second position (ortho position) and the fourth position (para position) as a blocking-switching element, to control the properties or the structure of the lignophenol derivative.

Furthermore, if a phenol derivative having substituents in the second position (ortho position) and the sixth position (ortho position) is used as the phenol derivative that is introduced, the carbon atom at the fourth position of such a phenol derivative bonds with the carbon atom in the benzyl position of the phenylpropane unit of the lignin. In this case, because a free ortho or para position does not exist, no introduction position for the cross-linking functional group exists in the introduced phenol derivative. Moreover, the phenol derivative having substituents in the second position (ortho position) and the sixth position (ortho position) does not exhibit a switching function, and thus functions as a stable control element.

In the present invention, a phenol derivative having a substituent in the fourth position (para position), a phenol derivative having substituents in the second position (ortho position) and the fourth position (para position), or a phenol derivative having substituents in the second position (ortho position) and the sixth position (ortho position) can be appropriately selected according to the intended purpose.

The "lignocellulose material" used in the present invention includes ligneous materials, i.e., various types of materials that primarily consist of wood, such as wood flour, chips, discarded lumber, and scrap wood. Wood from both coniferous and broadleaved trees can be used. Furthermore, various types of herbaceous plants and related specimens, such as agricultural waste, can also be used.

The acid that is added to the lignocellulose material preferably possesses the properties of swelling cellulose and minimizing hydrolysis of cellulose. Specific examples of the acid include at least 85% by weight phosphoric acid, at least 38% by weight hydrochloric acid, p-toluene sulphonate, trifluoracetic acid, trichloroacetic acid and formic acid. Preferred acids include phosphoric acid, trifluoracetic acid, and formic acid that contain at least 85% by weight (more preferably at least 95% by weight) of the acid.

Next, methods for synthesizing lignocellulose compositions described in the present invention will be explained in further detail. The lignocellulose compositions described in the present invention contain a lignophenol derivative and a cellulose component.

The "lignophenol derivative" referred to in this Specification means a polymer that contains a diphenylpropane unit, into which a phenol derivative has been introduced via a C-C bond, on the side-chain $\alpha$ position in the phenylpropane unit of the lignin. The volume and molecular weight of the phenol derivative introduced into this polymer vary depending on the lignocellulose that is used as the raw material and the reaction conditions.

In order to synthesize the lignocellulose compositions described in the present invention from a lignocellulose material, it is necessary to contact the lignin in the lignocellulose material with a phenol derivative in order to produce a lignophenol derivative. The two below-described methods are available for converting the lignin contained within the lignocellulose material into a lignophenol derivative.

In the first method, a liquid phenol derivative (e.g., the above-noted p-cresol) is absorbed into the lignocellulose material, such as wood flour, thereby solvating the lignin with the phenol derivative. Next, a highly concentrated acid (e.g., 95% phosphoric acid as noted above) is added to the lignocellulose material, and the combination is mixed to dissolve the cellulose component. This method forms a system in which the phenol derivative, in which the lignin was solvated, and the highly concentrated acid, in which the cellulose component has been dissolved, are separated into two-phases. The lignin that has been solvated by the phenol derivative contacts the highly concentrated acid only at the boundary of the phenol derivative and the acid; the cation in the side-chain $\alpha$ position (benzyl position), which is a highly reactive site of the lignin base configuration unit, created through the contact with the acid, is attacked by the phenol derivative. As a result, the phenol derivative is introduced into the aforementioned $\alpha$ position via a C-C bond, and smaller molecules are produced as the benzyl-allyl-ether bond breaks down. This process converts the lignin into smaller molecules; at the same time, a lignophenol derivative, into whose benzyl position of its base configuration unit a phenol derivative has been introduced, is formed in the phenol derivative phase.

In the second method, after a solvent (e.g., ethanol or acetone), into which a solid or liquid phenol derivative has been dissolved, is absorbed into a lignocellulose material, the solvent is removed (phenol derivative sorption process). Next, a highly concentrated acid (e.g., 95% phosphoric acid as described above) is added to this lignocellulose material in order to dissolve the cellulose component. As a result, as in the first method, the lignin that has been solvated by the phenol derivative contacts the highly-concentrated acid; the cation in the highly reactive site (side-chain $\alpha$ position) of the lignin, created through the contact with the acid, is attacked by the phenol derivative, thereby introducing the phenol derivative. Additionally, the benzyl-allyl-ether bond breaks down, thereby converting the lignin into smaller molecules.

To synthesize the lignocellulose composition described in the present invention from the aforementioned reaction mixture, the entire reaction liquid, which was subjected to the highly concentrated acid treatment, is poured into an excess of water, and the insoluble portion is collected by centrifugal separation and dried after neutralizing the acid. The lignophenol derivative and the cellulose component are uniformly dispersed within this dried product.

The lignocellulose compositions described in the present invention ordinarily possess plasticity. However, this plasticity is lost when the lignophenol portion within said composition is extracted. Therefore, it is presumed that, in the lignocellulose composition described in the present invention, the lignophenol portion is exhibiting an important plasticizing effect.

It is also possible to increase the plasticity of said composition by acylating (e.g., acetylating) the lignophenol derivative within the lignocellulose composition described in the present invention. That is, according to the lignocellulose compositions described in the present invention, lignophenol derivatives tend to bond with each other or with cellulose portions via hydrogen bonds, thereby resulting in an association between elements. In this case, the plasticity of said composition is not very high. However, it is possible to cancel the association between elements by acylating (e.g., acetylating) the lignophenol derivative, and as a result, improve the plasticity of the entire lignocellulose composition, while reducing the processing energy required for molding, etc. Furthermore, it is also possible to use the lignophenol derivative with the lignocellulose composition described in the present invention by hydroxymethylating the lignophenol derivative. When a hydroxymethylated material is used, a product can be formed that exhibits a relatively low density and a high water-adsorption rate, and that has excellent stability.

The lignocellulose compositions described in the present invention can be processed into any desired shape, and preferably can be molded into a molded form for use or can be used as a composition for repairing wood-based products.

For example, the lignocellulose compositions described in the present invention can be formed into any desired shape using a mold or die, thus creating molded products.

Examples of molding methods that can be used include injection molding, compression molding, fiber or film extrusion, shape extrusion, gas stream fiber forming, and base material cladding.

When manufacturing a molded form using the lignocellulose compositions described in the present invention, various types of temporary molding processes before molding, as well as molding methods, can be selected and/or added; other additional processes can also be added, depending upon the type of material that is used.

In the alternative, the lignocellulose compositions described in the present invention can be used in any desired mode such as a melted form or granules, or as a solution in a volatile solvent.

Although there are no particular limitations on the application of the lignocellulose composition described in the present invention, examples of molded products include packaging films, coated products (paper, cardboard, non-woven fabrics, etc.), fibers, non-woven fabrics, extrusion-molded nets, personal hygiene products, bottles and drinking containers, agricultural and horticultural films, containers, and controlled release devices.

The lignocellulose compositions described in the present invention can also be used as a resin material, such as a composition for repairing wood-based products.

Lignophenol derivatives can be extracted and separated from the lignocellulose compositions described in the present invention using only simple solvent immersion. Specifically, the lignocellulose compositions described in the present invention may be immersed in a solvent (e.g., acetone) that is compatible with the lignophenol derivative, or immersed and agitated. The lignophenol derivative can be easily recovered by recovering the fraction that is soluble in the solvent. As explained above, the components of the lignocellulose compositions described in the present invention can be easily separated and reused, thus effectively achieving resource recycling.

Lignophenol derivatives can also be easily recovered from the products formed using the lignocellulose compositions described in the present invention, just as lignophenol derivatives can be recovered from the lignocellulose compositions described in the present invention. Specifically, lignophenol derivatives can be recovered as explained below. That is, the molded form, either in its original shape or after being processed into small pieces, is immersed in a solvent that is compatible with the lignophenol derivative, or is immersed and agitated.

As a result, the lignophenol derivative will dissolve into the solvent. By converting the molded form into small pieces and agitating in the solvent, fast separation and extraction becomes possible. If it is necessary to retain the original shape of the molded form, it can be immersed in a non-aqueous solvent (e.g., acetone) that is compatible with the lignophenol derivative, and is left in the solvent without agitation to extract the lignophenol derivative. The lignophenol derivative recovered in this way can be used again in various applications, such as manufacturing of molded bodies. The cellulose material, which is separated at the same time, can also be used again for manufacturing molded bodies and other various types of processed products.

The contents of Japanese Patent Application No. 2000-96221, which forms the basis for the priority claim in the present application, are incorporated herein by reference as if fully disclosed herein.

EXAMPLES:

EXAMPLE 1: Synthesis and evaluation of lignocellulose compositions

(1) Preliminary experiment

(1-1) Synthesizing defatted specimens

Wood flour from Japanese cypress (Chamaecyparis obtusa) and Japanese beech (Fabus crenata) was made into finer flours using a vibration mill (TI-50 made by Heiko Seisakusho) and was sieved using an 80-mesh sieve (made by Iida Seisakusho), thereby obtaining 80-mesh wood flour. This wood flour was first extracted for 48 hours using a solvent consisting of ethanol and benzene (at a 1:2 ratio), and then the solvent was completely evaporated, thus producing the sample specimens.

(1-2) Measuring the moisture content of the defatted specimens

Precisely 1 g of the defatted specimen was measured into a weighing bottle having a constant known weight and was completely dried using a hot air blower (105°C); the weight of the wood flour was then measured. Moisture content was determined based on the difference in weight before and after drying, and the moisture content was used for correction calculations.

(1-3) Measuring the amount of lignin in the defatted specimen (Klason method)

Precisely 1 g of the defatted specimen was measured into a 100-ml beaker, and then 15 ml of 72% sulfuric acid at 20°C was gradually added and mixed using a glass rod. The mixture was then reacted for 4 hours at 20°C using a 20°C water bath while being sufficiently agitated to ensure uniform progress of the reaction. Then, the mixture was quantitatively transferred to a 1000-ml Erlenmeyer flask with a marker placed at the 575-ml mark; deionized water was then added to dilute the sulfuric acid concentration to 3%. The diluted mixture was heated and boiled for 2 hours while occasionally adding deionized water without the use of a Liebig condenser in order to maintain the sulfuric acid concentration at 3%. After this process, the contents were filtered using a 1G4 glass filter having a constant known weight; the insoluble portion was rinsed with hot water and then dried at 105°C, and the weight of the acid-insoluble lignin was measured. When a broad-leaf wood material was used, the filtrate was first diluted 10X with 3% sulfuric acid and then absorbance was measured at 205 nm using a JASCO UV-520, thereby determining the volume of acid-soluble lignin.

Method for calculating the amount of acid-soluble lignin:

$$B = A/(110 \times D)$$

$$\text{Lignin (\%)} = (B \times V \times 100)/(1000 \times W)$$

D: Dilution rate; W: Specimen weight; V: Total volume of liquid filtered; A: Absorbance

(2) Phosphoric acid phase separation

(2-1) Sorption of phenol derivative

Twenty three grams of the defatted wood flour were each placed in 500-ml beakers; various acetone solutions containing a phenol derivative (p-cresol, 2,6-xylenol, 2,4-xylenol, 2-methoxyphenol (Guaiacol), 2,6-dimethoxyphenol, catechol, resorcinol, homocatechol, pyrogallol, and phloroglucinol) were made (utilizing 3 moles of phenol derivative per lignin C9 unit) and one acetone solution was added to each beaker; the mixtures were agitated using a glass rod; the beakers were capped with aluminum foil and para film, and left undisturbed for 24 hours. Afterwards, the wood flour was vigorously agitated in an evaporator, thereby removing the acetone.

(2-2) Phosphoric acid treatment (phase separation)

Two hundred milliliters of phosphoric acid (at 50°C) was added in three increments to the wood flour into which the phenol derivative was previously sorbed; the mixture was kneaded using a glass rod and a Teflon spatula, and was vigorously agitated for 1 hour at 50°C. Afterwards, the reaction product was added to approximately 350 ml of deionized water, thus reducing the phosphoric acid concentration to 10% or less and stopping the reaction. Furthermore, the reaction product was vigorously agitated for 1 hour using a stirrer in order to disperse the reaction product. Then, the insoluble fraction was collected by centrifugal separation (8,800 rpm, 8 minutes, 4°C), subjected to a de-acidification process, and freeze-dried and dried under reduced pressure, thus obtaining phase-separated wood flour.

The specimen thus obtained is a composition that uniformly contains a lignophenol derivative and a cellulose component (this composition is also referred to as a lignocellulose composition in this Specification).

(2-3) Separation of lignophenol derivatives from phosphoric acid phase-separated wood flour

In order to investigate the characteristics of the lignophenol derivative within the composition that uniformly contains a lignophenol derivative and a cellulose component, which was obtained in (2-2), the lignophenol derivative was separated from the cellulose component.

First, 8 to 10 g of the phase-separated wood flour obtained from the phosphoric acid treatment in (2-2) was placed in a 300-ml Erlenmeyer flask, 200 ml of acetone was added, the flask was tightly capped, and the mixture was vigorously agitated for 24 hours using a stirrer. Afterwards, the mixture was fractionated by centrifugal separation (3,500 rpm, 5 minutes, 5°C) and filtration (Whatman GF/A). The insoluble fraction was subjected to the same process and a second acetone extraction was performed. After the solvent was removed, the remainder was dried over diphosphorus pentoxide and under reduced pressure. After the soluble fraction was condensed to 20 ml using a rotary evaporator, it was dripped into an extreme excess of diethyl ether (400 ml of diethyl ether in a 500-ml Erlenmeyer flask) while being vigorously agitated. A cottony precipitate was collected by centrifugal separation (3,500 rpm, 5 minutes, 5°C), rinsed three times with diethyl ether, and was then dried over diphosphorus pentoxide and under reduced pressure.

(2-4) Acetylation

One hundred milligrams of the lignin specimen (the acetone-soluble, but ether-insoluble fraction) was placed in a 5-ml vial, and 1 ml of pyridine was added. After the lignin specimen was completely dissolved, 1 ml of glacial acetic acid was added, and the mixture was left standing at room temperature for 48 hours. Afterwards, 40 ml of the reaction product was dripped into cold water, the insoluble fraction was collected by centrifugal separation (3,500 rpm, 10 minutes, 5°C), rinsed with cold water, and was then freeze-dried and dried under reduced pressure.

(3) Material characteristics test and structural analysis of the specimen

(3-1) Thermal mechanical analysis (TMA)

The thermal mechanical analysis test measured the phase transition point and softening speed of the processed specimen. The specimen was placed on an aluminum plate, a load was applied in the vertically downward direction, heat was applied at a constant temperature-increase rate until the specimen reached a predetermined temperature, and the displacement volume was plotted along the way. The measurements were performed using a Thermo Plus TMA (8310) (made by Rigaku Corporation) under the conditions described below.

Specimen weight: 5 mg
Aluminum plate: 5-mm diameter x 2.5 mm
TMA load: 5.00 g
Temperature increase rate: 2°C/minute
Final temperature: 250°C

(3-2) Measurement of the molecular weight of the lignophenol derivative using gel permeation chromatography (GPC)

Approximately 2 ml of tetrahydrofuran (THF), which was previously fractionated and degassed to remove a stabilizer and impurities, and approximately 1 mg of the lignophenol derivative were added to a test tube; the mixture was agitated using a touch mixer, thereby completely dissolving the lignophenol derivative. Afterwards, one drop of the dilute p-cresol THF solution was added as an internal standard, and the mixture was again agitated using a touch mixer until the mixture was completely homogenized. Measurements were taken using a SHIMADZU LC10 under the conditions described below.

Columns: Shodex FK804, 803, 802, and 801
Solvent: THF
Fluid speed: 1 ml/minute
Pressure: 28 - 30 kg/cm$^2$
Sensor: UV (280)
Range: 0.32
Sample volume: 150 μl

An analytical curve was generated using polystyrene 390000, 233000, 100000, 25000, 9000, 4000, 2200, 760, 474, 390, and 266, as well as bisphenol A and p-cresol as reference substances.

(4) Results

(4-1) Yield of the lignocellulose mixture following treatment using various phenol derivatives and/or 95% phosphoric acid

Table 1 below shows the yield of the phenol derivative and the yield of the lignocellulose mixture following treatment using 95% phosphoric acid (phase separation treatment).

Table 1:

| Yield (% relative to the original wood flour) | | |
| --- | --- | --- |
| Phenol derivative type | Japanese cypress | Japanese beech |
| p-cresol | 98.4 | 77.4 |
| 2,6-xylenol | 98.9 | 81.1 |
| 2,4-xylenol | 92.5 | 80.2 |
| 2-methoxyphenol | -- | -- |
| 2,6-dimethoxyphenol | 97.8 | 80.9 |
| Catechol | 93.9 | 75.1 |
| Resorcinol | -- | -- |
| Homocatechol | 82.1 | 73.8 |
| Pyrogallol | 85.2 | 56.2 |
| Phloroglucinol | 98.9 | 104.4 |

(4-2) Yield of the acetone-soluble, but diethyl ether-insoluble fraction following treatment using various phenol derivatives and/or 95% phosphoric acid

Tables 2 and 3 below show the yield of the acetone-soluble but diethyl ether-insoluble fraction following treatment using 95% phosphoric acid (phase separation treatment).

Table 2:

| Yield (% relative to the phase-separated wood flour) | | |
| --- | --- | --- |
| Phenol derivative type | Japanese cypress | Japanese beech |
| p-cresol | 11.6 | 21.1 |
| 2,6-xylenol | 26.7 | 23.0 |
| 2,4-xylenol | 16.0 | 19.3 |
| 2-methoxyphenol | -- | -- |
| 2,6-dimethoxyphenol | -- | -- |
| Catechol | 13.0 | 17.3 |
| Resorcinol | -- | -- |
| Homocatechol | 25.5 | 23.0 |
| Pyrogallol | 8.2 | 3.8 |
| Phloroglucinol | 8.1 | 23.1 |

Table 3:

| Yield (% relative to Klason lignin) | | |
| --- | --- | --- |
| Phenol derivative type | Japanese cypress | Japanese beech |
| p-cresol | 36.3 | 70.9 |
| 2,6-xylenol | 86.8 | 79.5 |
| 2,4-xylenol | 48.6 | 66.0 |
| 2-methoxyphenol | -- | -- |
| 2,6-dimethoxyphenol | -- | -- |
| Catechol | 40.1 | 55.4 |

Table 3: (continued)

| Yield (% relative to Klason lignin) | | |
|---|---|---|
| Phenol derivative type | Japanese cypress | Japanese beech |
| Resorcinol | -- | -- |
| Homocatechol | 68.8 | 72.3 |
| Pyrogallol | 15.6 | 9.1 |
| Phloroglucinol | 26.3 | 102.8 |

(4-3) Characteristics of the acetone-soluble, but diethyl ether-insoluble fraction following treatment using various phenol derivatives and/or 95% phosphoric acid

Table 4 below shows the average molecular weight of the acetone-soluble, but diethyl ether-insoluble fraction following treatment using various phenol derivatives and/or 95% phosphoric acid. Figure 1 (Japanese cypress) and Figure 2 (Japanese beech) show the GPC measurement results that were used to calculate the molecular weights.

Table 4:

| Average molecular weight [Mw (Mw/Mn)] | | |
|---|---|---|
| Phenol derivative type | Japanese cypress | Japanese beech |
| p-cresol | 9963 (2.7) | 4704 (2.0) |
| 2,6-xylenol | 16133 (2.4) | 5418 (1.9) |
| 2,4-xylenol | 20418 (4.0) | 10898 (3.0) |
| 2-methoxyphenol | -- | -- |
| 2,6-dimethoxyphenol | -- | -- |
| Catechol | 4782 (1.6) | 3888 (1.4) |
| Resorcinol | -- | -- |
| Homocatechol | 5500 (1.7) | 4306 (1.5) |
| Pyrogallol | 4234 (1.4) | 3357 (1.3) |
| Phloroglucinol | 7758 (1.9) | 7979 (2.3) |

(4-4) Yield of the acetone-soluble, but diethyl ether-insoluble fraction following acetylation

Table 5 below shows the yield of the acetone-soluble, but diethyl ether-insoluble fraction following acetylation.

Table 5:

| Yield (% relative to the acetone-soluble but diethyl ether-insoluble fraction) | | |
|---|---|---|
| Phenol derivative type | Japanese cypress | Japanese beech |
| p-cresol | -- | -- |
| 2,6-xylenol | 120.0 | 114.0 |
| 2,4-xylenol | 122.1 | 115.5 |
| 2-methoxyphenol | -- | -- |
| 2,6-dimethoxyphenol | -- | -- |
| Catechol | 135.4 | 128.4 |
| Resorcinol | -- | -- |
| Homocatechol | 132.5 | 129.0 |
| Pyrogallol | 140.2 | 143.0 |
| Phloroglucinol | 127.4 | 124.3 |

(4-5) Results of the thermal mechanical analysis (TMA)

Figures 3 through 5 show the measurement results of the TMA curves for the lignocellulose material following treatment using various phenol derivatives and/or 95% phosphoric acid, the acetone-soluble, but diethyl ether-insoluble fraction, and the acetone-soluble, but diethyl ether-insoluble fraction following acetylation.

In the phenol derivative yield and the TMA pattern for the lignocellulose mixture following treatment using 95% phosphoric acid (phase separation treatment), phase transition points were observed in the 150 to 200°C temperature range. These phase transition points match the phase transition points of the lignophenol fraction extracted from the phase-separated specimen, thereby indicating that the lignophenol derivative greatly contributes to the plasticity of the entire converted form (lignocellulose mixture treated with a phenol derivative and phosphoric acid).

Example 2: Manufacture and evaluation of molded forms comprising lignocellulose compositions

(1) Phosphoric acid phase separation (Phosphoric acid treatment)

Acetone solutions (utilizing 3 moles of a phenol derivative per lignin $C_9$ unit) containing various phenol derivatives (p-cresol, Guaiacol, catechol, resorcinol or phloroglucinol) were each added to 1 g of the defatted specimen to soak. Afterwards, the acetone was completely removed under agitation, thus generating a homogenized yield specimen.

Ten milliliters of 95% phosphoric acid was added to the resulting specimen, and the mixture was vigorously agitated for 1 hour at 50°C. Then, the mixture was placed in an excess of water; the insoluble section was collected by centrifugal separation (8,800 rpm, 8 minutes, 5°C), subjected to a de-acidification process, and freeze-dried, thus obtaining a lignocellulose composition specimen.

(2) Acetylation

Seven grams of the glacial non-aqueous acetic acid was added and the mixture was left to react under agitation for 96 hours. After the reaction, the mixture was dripped into 3 L of cold water at 5°C; the insoluble fraction was collected by centrifugal separation (8,800 rpm, 8 minutes, 5°C), rinsed with 5°C cold water, and then freeze-dried.

(3) Hydroxymethylation

One hundred forty milliliters of 0.5N NaOH was added to 7 g of the lignocellulose composition and the mixture was agitated for approximately 30 minutes in order to disperse the composition. Afterwards, the mixture was transferred to a 1-L three-neck flask and was diluted 5X while being agitated. A reflux tube was installed, and a 37% formaldehyde solution (80 moles per $C_9$ lignophenol aromatic nucleus) was added under a nitrogen atmosphere; the mixture was left to react for 3 hours at 60°C in a hot water bath. After the reaction, 1N HCL was added to the mixture in order to adjust the pH to 2; the resulting precipitate was collected by centrifugal separation (8,800 rpm, 10 minutes, 5°C), subjected to a de-acidification process, and then freeze-dried. The resulting hydroxymethylated form was stored at -80°C.

(4) Molding

Five hundred milligrams each of the lignocellulose composition specimen (original) and its acetylated and methylolated forms were preliminarily molded in a molding vessel (10-mm diameter). Afterwards, the molded form was placed in the heated/compression cylinder (10-mm diameter) of a SHIMADZU flow tester CFT-500D and was molded under the conditions described below.

| <Molding conditions> | | | | |
|---|---|---|---|---|
| Specimen | Pressure (kgf) | Rate (°C/min.) | Temperature (Initial-Last)(°C) | Holding time (min.) |
| Original | 50 | 1.5 | 70-180 | 0 |
| Acetate | 50 | 1.5 | 70-130, 150 | 0 |
| Hydroxy methylated | 50 | 1.5 | 70-180 | 20 |

(5) Various tests

Water adsorption test

Various types of lignocellulose composition molded forms were placed on a stainless steel net and submerged in a container of water so that the water surface was level with a point 3 cm from the bottom of each of the molded forms. If one of the molded forms floated up, a stainless steel net was placed at a distance of 1 to 2 mm above the top surface of the molded form in order to prevent it from floating above that point. After submersion in water for 60 minutes at room temperature, the molded forms were removed and rolled on filter paper in order to quickly remove surface moisture. The molded forms were then dried for 3 days at 60°C. During this process, both the weights and dimensions before water adsorption, after water adsorption, and after drying were measured; the water adsorption Aw% and the volume expansion rate Vol% were determined using Equations (1) and (2), which are identified below.

$$Aw\% = (Wt'-Wt)/Wt \times 100 \tag{1}$$

$$Vol\% = (Vol'- Vol)/Vol \times 100 \tag{2}$$

Aw%: Water adsorption rate (% of sample weight)

Wt: Specimen weight (g)

Wt': Specimen weight following water adsorption test (g)

Vol%: Volume expansion rate (% to sample volume)

Vol: Specimen volume ($cm^3$)

Vol': Specimen volume following water adsorption test (the "Wet" column in the table below) or redrying (the "Dry" column in the table below) ($cm^3$)

Hardness test (Brinell Hardness)

Hardness tests were carried out in accordance with JIS2117 using a SHIMADZU AG-1 10kN. A 10-mm diameter hard ball was forced into the center of the top surface of the various lignocellulose composition molded forms at a rate of 0.5 mm/minute. The load P (N) required for the hard ball to sink to a depth of $1/\pi$ mm = 0.32 mm was measured, and the hardness $H_B$ (MPa) was determined using Equation (3) shown below.

$$H_B = P/10 \tag{3}$$

$H_B$: Brinell Hardness (MPa)

P: Load (N)

(6) Results

The results are shown in the table below.

| Polysaccharide -Lignophenol | Density | Water absorption rate | Volume expansion rate (%) | | Brinell hardness |
|---|---|---|---|---|---|
| | (g/cm$^3$) | (%) | Wet | Dry | (Mpa) |
| p-cresol(original) | 1.01 | 7.9 | - | | - |
| p-cresol(acetate) <70~130°C> | 0.99 | 1.8 | 0.6 | -0.7 | 31.9 |
| p-cresol(acetate) <70~150°C> | 1.21 | 0.8 | 0.6 | -0.7 | - |
| p-cresol (Hydroxymethylated) | 0.71 | 17.3 | 13.1 | -1.8 | 18.2 |

(continued)

| Polysaccharide -Lignophenol | Density | Water absorption rate | Volume expansion rate (%) | | Brinell hardness |
|---|---|---|---|---|---|
| | (g/cm$^3$) | (%) | Wet | Dry | (Mpa) |
| Guaiacol (Hydroxymethylated) | 0.76 | 77.9 | 23.4 | -0.5 | - |
| Catechol (Hydroxymethylated) | 0.67 | 93.9 | 15.7 | 2.2 | - |
| Phloroglucinol (Hydroxymethylated) | 0.60 | 120.1 | 18.9 | 3.7 | - |
| MDF | 0.57 | - | | | |
| Japanese cypress | 0.47 | 81.6 | 9.4 | -2.3 | cross section 12.5 tangential section 8.9 radial section 6.9 |

Possibilities for Industrial Application

The present invention provides new compositions that enable repeated and effective utilization of both lignin and cellulose, which are the components of lignocellulose composition structures in forest resources, thereby making it possible to effectively utilize forest resources. In addition, the present invention enables recovery of lignin components from the aforementioned compositions as lignophenol derivatives, thereby making it possible to effectively utilize the lignin components in forest resources.

**Claims**

1.   A lignocellulose composition comprising a lignophenol derivative and a cellulose component, formed by adding an acid to a lignocellulose material, to which a phenol derivative was previously sorbed, and mixing the combination.

2.   The lignocellulose composition according to claim 1, wherein the lignophenol derivative component and the cellulose component form a homogenized system.

3.   The lignocellulose composition according to claim 1 or 2, wherein the acid possesses the property of swelling cellulose and minimizes hydrolysis of the cellulose component.

4.   The lignocellulose composition according to any of claims 1 to 3, wherein the acid is phosphoric acid, formic acid, or trifluoracetic acid.

5.   The lignocellulose composition according to any of claims 1 to 4, wherein the phenol derivative added to the lignocellulose material is a phenol derivative having at least one substituent in the ortho and/or para positions.

6.   The lignocellulose composition according to any of claims 1 to 5, wherein the phenol derivative added to the lignocellulose material is a phenol derivative having at least one substituent in the ortho and/or para positions, which substituent is selected from a lower alkyl, a lower alkoxy and a hydroxyl group.

7.   A lignocellulose composition comprising a lignophenol derivative and a cellulose component, formed by:

   adding a 95% phosphoric acid to a lignocellulose material, to which a phenol derivative was previously sorbed, the phenol derivative being selected from p-cresol, 2,6-xylenol, 2,4-xylenol, 2-methoxyphenol (Guaiacol), 2,6-dimethoxyphenol, catechol, resorcinol, homocatechol, pyrogallol, and phloroglucinol; and mixing the combination.

8.   The lignocellulose composition according to any of claims 1 to 7, wherein the lignophenol derivative is acylated or methylolated.

9.  The lignocellulose composition according to any of claims 1 to 8, **characterizing in** being a plasticizing material.

10. A molded product comprising the lignocellulose composition according to any of claims 1 to 9.

11. A method for manufacturing the lignocellulose composition according to any of claims 1 to 9, including adding an acid to the mixture obtained by solvating the lignin component with a phenol derivative by processing a lignocellulose material using said phenol derivative, and mixing the resulting combination.

*Chamaecyparis obtusa*

28.424

28.311

28.757

28.770

9.004

28.636

(1)

(2)

(3)

(4)

(5)

(6)

10    20    30    40

Retention Time                    Min

FIG. 1

FIG. 2

*Chamaecyparis obtusa*

Up ↕ Volume ↕ Down

(5) (6)
(1)
(2)
(3)
(4)

——— 2, 6-xylenol
——— 2, 4-xylenol
——— Catechol
——— Homocatechol
——— Pyrogallol
——— Phloroglucinol

100   150   200   250
Temperature (℃)

*Fagus crenata*

(1)
(2)
(3)
(5)
(4)
(6)

100   150   200   250
Temperature (℃)

FIG. 3

EP 1 273 632 A1

FIG. 4

**Chamaecyparis obtusa**

Volume: Up ↔ Down

Temperature (℃): 100 150 200 250

Legend:
- 2, 6-xylenol
- 2, 4-xylenol
- Catechol
- Homocatechol
- Pyrogallol
- Phloroglucinol

Curves labeled (1), (2), (3), (4), (5), (6)

**Fagus crenata**

Temperature (℃): 100 150 200 250

Curves labeled (1), (2), (3), (4), (5), (6)

EP 1 273 632 A1

Chamaecyparis obtusa

Fagus crenata

Up
Volume
Down

Temperature (℃)

Temperature (℃)

— 2, 6-xylenol
— 2, 4-xylenol
— Catechol
— Homocatechol
— Pyrogallol
— Phloroglucinol

FIG. 5

EP 1 273 632 A1

| INTERNATIONAL SEARCH REPORT | International application No. |
|---|---|
| | PCT/JP01/01860 |

| A. CLASSIFICATION OF SUBJECT MATTER |
|---|
| Int.Cl$^7$ C08L97/02, C08K5/13, C08K3/32 |
| According to International Patent Classification (IPC) or to both national classification and IPC |

| B. FIELDS SEARCHED |
|---|
| Minimum documentation searched (classification system followed by classification symbols)<br>   Int.Cl$^7$ C08L97/00-97/02, C08K3/00-5/59 |
| Documentation searched other than minimum documentation to the extent that such documents are included in the fields searched<br>   CAS ONLINE (STN) |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP, 4-300950, A (Hitachi Chemical Co., Ltd.),<br>23 October, 1992 (23.10.92),<br>Claims; Par. Nos. 5, 7 to 9<br>(Family: none) | 1-3,5,6,8-11<br>4,7 |
| X<br>Y | JP, 9-278904, A (Masamitsu FUNAOKA),<br>28 October, 1997 (28.10.97),<br>Claims; Par. Nos. 15, 19, 37<br>(Family: none) | 1-3,5,6,9-11<br>4,7,8 |
| X<br>Y | JP, 2-233701, A (Masamitsu FUNAOKA),<br>17 September, 1990 (17.09.90),<br>Claims   (Family: none) | 1-3,5,6,9-11<br>4,7,8 |
| X<br>Y | JP, 1-158021, A (Oji Paper Co., Ltd.),<br>21 June, 1989 (21.06.89),<br>Claims; page 4, upper left column, lines 1 to 4; page 4,<br>lower left column, lines 3 to 1   (Family: none) | 1-3,5,6,9-11<br>4,7,8 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   17 May, 2001 (17.05.01) | Date of mailing of the international search report<br>   29 May, 2001 (29.05.01) |
|---|---|
| Name and mailing address of the ISA/<br>   Japanese Patent Office | Authorized officer |
| Facsimile No. | Telephone No. |

Form PCT/ISA/210 (second sheet) (July 1992)

## INTERNATIONAL SEARCH REPORT

| International application No. |
| --- |
| PCT/JP01/01860 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y<br>A | JP, 7-148712, A (Mokushitsu Sozai Gijutsu Kenkyu Kumiai),<br>13 June, 1995 (13.06.95),<br>Claims; Par. Nos. 10 to 11    (Family: none) | 4,7,8<br>1-3,5,6,9-11 |
| Y<br>A | JP, 62-42801, A (Isao SAKATA),<br>24 February, 1987 (24.02.87),<br>Claims    (Family: none) | 8<br>1-7,9-11 |

Form PCT/ISA/210 (continuation of second sheet) (July 1992)